# NEUE EUROPÄISCHE PATENTSCHRIFT

(11) **EP 0 107 774 B2**
(45) Veröffentlichungstag und Bekanntmachung des Hinweises auf die Entscheidung über den Einspruch: **18.08.1993**
(45) Hinweis auf die Patenterteilung: 10.08.1988
(21) Anmeldenummer: 83109151.7
(22) Anmeldetag: 16.09.1983
(51) Int. Cl.: F24D 3/00, G05D 23/19, F24D 19/10

(54) **Regeleinrichtung für eine Heizungsanlage**
Heating control system
Dispositif de régulation pour une installation de chauffage

(30) Priorität: 01.10.1982 DE 8227601 U
(43) Veröffentlichungstag der Anmeldung: 09.05.1984
(73) Patentinhaber: Joh. Vaillant GmbH u. Co., 42810 Remscheid (DE); COFRABEL N.V., B-1620 Drogenbos (BE); VAILLANT S.A.R.L, 94537 Rungis Cedex (FR); VAILLANT Ges.m.b.H, 1233 Wien (AT); Vaillant Ltd., Rochester Kent ME2 4EZ (GB); SCHONEWELLE B.V., 1099 BX Amsterdam (NL); Vaillant GmbH, 8953 Dietikon 1 (CH)
(72) Erfinder: Taag, Jürgen, D-5630 Remscheid 1 (DE)
(74) Vertreter: Heim, Johann-Ludwig

(56) Entgegenhaltungen:
- DE-A- 2 856 018
- DE-A- 2 906 577
- DE-A- 2 916 748
- DE-A- 3 036 099
- DE-A- 3 104 224
- DE-C- 2 353 667
- DE-C- 3 109 843
- FR-A- 2 481 425
- FR-A- 2 501 837
- US-A- 4 337 893

## Beschreibung

Die vorliegende Erfindung bezieht sich auf eine Regeleinrichtung für eine von mindestens zwei Wärmequellen beheizbare Heizungsanlage gemäß den Oberbegriffen der unabhängigen Ansprüche 1 bis 3.

Solche Heizungsanlagen sind in Form von Mehrkesselheizungen oder dem Zusammenschalten von Wärmepumpen mit Zusatzkesseln bekannt. Hierbei weist jede Wärmequelle ihren eigenen Regler auf, die Regler unterscheiden sich durch unterschiedlich liegende Ein- und Ausschaltschwellen beziehungsweise bei der Verwendung von stetigen Reglern durch unterschiedlich liegende Regelbereiche beziehungsweise Sollwerte.

Die Regelgröße ist bei solchen von mehreren Wärmequellen beaufschlagten Heizungsanlagen in der Regel die Heizungsvorlauftemperatur. Da wenigstens zwei Regler zur Anwendung kommen und die Regler insbesondere bei der Verwendung von Zwei-Punkt-Reglern Schalthysteresen aufweisen, die zudem noch von einem Abstand zwischen der Ausschaltschwelle des auf der niedrigeren Temperatur gelegten Reglers und der Einschaltschwelle des auf die höhere Temperaturgelegten Reglers gekennzeichnet sind, ergibt sich eine relativ große Regelabweichung, die nicht unterschritten werden kann.

Aus der DE-C-3 109 843 ist eine von zwei Wärmequellen (Heizkessel und Wärmepumpe) beheizbare Heizungsanlage bekanntgeworden, wobei eine Temperaturregeleinrichtung vorhanden ist, die einen Außentemperaturfühler und einen Rücklauftemperaturfühler aufweist Ausgangssignale des Reglers werden den Verdichterstufen der Wärmepumpe und dem Heizkessel über Schwellwertbetriebsschalter mit unterschiedlichen Ansprechschwellwerten zugeführt, wobei der Heizkesselbetriebsschalter den höchsten Ansprechschwellwert aufweist. Ein solcher gemeinsamer Regler wird nur dann installiert, wenn Wärmepumpe und Heizkessel zusammen an den Aufstellungsort geliefert werden. Wird eine Heizungsanlage hingegen modifiziert und kommt dann eine zweite Wärmequelle zur ersten hinzu, werden beide mit Reglern ausgestattet sein, deren synchroner Betrieb dann nicht mehr gewährleistet ist.

Weiterhin bekannt ist ein in der DE-OS 30 36 099 beschriebenes Steuersystem für eine Wärmepumpe, die mindestens eine Zusatzwärmestufe einschließt, wobei ein elektronischer Thermostat vorgesehen ist, der das Maß der Temperaturänderung, das heißt die Temperaturänderungsgeschwindigkeit in dem zu erwärmenden Raum erfühlen kann. Die Zusatzwärmestufe wird erst aktiviert, wenn die durch die Grundstufe der Wärmepumpe erreichte Temperaturänderung in Richtung auf den Soll-Wert quasi sehr langsam erfolgt.

Nachteilig dabei ist insbesondere, daß die Zusatzwärmestufe bei diesem Steuersystem unabhängig von der zu überbrückenden Temperaturdifferenz geschaltet wird.

Aus der DE-AS 23 53 667 ist ein elektrischer Durchlauferhitzer mit thermischer Steuerung und mehreren Heizwiderständen bekanntgeworden, bei dem jeder Heizwiderstand einen Schaltregler aufweist, wobei die einzelnen Schaltregler entsprechend einer Schalthierarchie aufeinander abgestimmt sind, so daß die Schalthäufigkeit minimiert wird. Der Aufwand zur Realisierung einer derartigen Reglermehrheit ist jedoch erheblich.

Der vorliegenden Erfindung liegt die Aufgabe zugrunde, bei der Verwendung eines stetigen oder unstetigen Reglers die Größe der Regelabweichung zu minimieren und ein unkontrolliertes Ein- und Ausschalten der zugehörigen Wärmequellen zu verhindern. Insbesondere soll ein voreiliges Zu- beziehungsweise Abschalten weiterer Wärmequellen vermieden werden.

Die Lösung dieser Aufgabe liegt in den kennzeichnenden Merkmalen der drei unabhängigen Ansprüche.

Weitere Ausgestaltungen besonders vorteil hafterWeiterbiidungen der Erfindung sind Gegenstand der abhängigen Ansprüche.

In der nachfolgenden Beschreibung ist ein Ausführungsbeispiel der Erfindung anhand eines Zwei-Punkt-Reglers näher erläutert.

Es zeigen:
Figur 1 eine schematische Darstellung einer Heizungsanlage,
Figur 2 ein Diagramm und
Figur 3 ein Blockschaltbild der Regeleinrichtung.

In allen drei Figuren bedeuten gleiche Bezugszeichen jeweils die gleichen Einzelheiten.

Eine Heizungsanlage 1 weist einen Verbraucher 2, bestehend aus einer Vielzahl parallel und/oder in Serie geschalteter Heizkörper oder einer Fußbodenheizungsanlage, auf, die über eine Vorlaufleitung 3, in der ein Temperaturfühler 4 angeordnet ist, mit einer Leitungsverzweigung 5 verbunden ist, von der zwei Wärmequellenzweige 6 und 7 abzueigen, in die Wärmequellen 8 und 9 eingeschaltet sind. Rücklaufseitig ist eine Rücklaufleitung 11 über eine Umlaufpumpe 10 und eine Verzweigungsstelle 12 mit den beiden Wärmequellen 8 und 9 verbunden, die aus einem Wärmetauscher 13 beziehungsweise 14 bestehen, der von einem Brenner 15 beziehungsweise 16 beheizt ist. Bei den Wärmequellen 8 und 9 kann es sich um Gas-Durchlauferhitzer, Ölkessel, also gleichartige Geräte, die sich in der Leistung unterscheiden können, aber nicht müssen, handeln. Die eine Wärmequelle kann auch eine Wärmepumpe sein, während die andere Wärmequelle eines der eben genannten Geräte sein kann. Gegebenenfalls können auch als Wärmequellen die Zusammenschaltung einer Kompressions- und einer Absorptionswärmepumpe in Frage kommen. Schließlich wäre es auch möglich, die eine Wärmequelle als Sonnenkollektor und die andere Wärmequelle als eines der eben beschriebenen Geräte auszubilden. Die Erfindung ist im übrigen nicht auf die Verwendung von zwei Wärmequellen beschränkt, es können auch noch mehr sein. So wird im Extremfall die Zusammenschaltung von vier Wärmequellen möglich, wobei im ersten Wärmequellenzweig ein Sonnenkollektor, im zweiten eine Kompressionswärmepumpe, im dritten eine Absorptionswärmepumpe und im vierten Zweig ein Kessel angeordnet ist.

Die Brenner 15 und 16 der beiden Wärmequellen 8 und 9 sind über eine Brennstoffzuleitung 17 gespeist, die eine Abzweigung 18 aufweist und mit den jeweiligen Brennern über Magnetventile 19 und 20 in Verbindung steht, die über Stellmagnete 21 und 22 bedient werden können. Diese Stellmagnete 21 und 22 beziehungsweise die Magnetventile 19 und 20 können 2-Punkt-Stellungen aufweisen, es besteht auch die Möglichkeit, kontinuierlich stetige Öffnungsquerschnitte anzusteuern.

Die beiden Stellmagnete 21 und 22 werden über Stelleitungen 23 und 24 von einer Regeleinrichtung 25 beaufschlagt, die zwei Regler 26 und 27 aufweist. Jeder Regler besitzt einen Soll-Wertgeber 28 und 29, beide Regler sind über eine Meßleitung 30 mit dem Vorlauftemperatur-Ist-Wertgeber 4 verbunden.

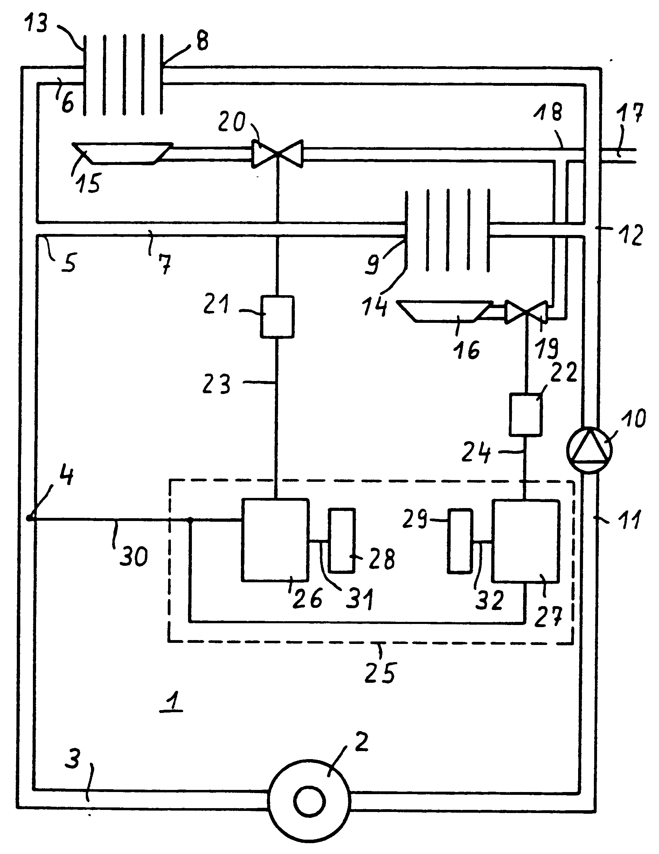

Beim Ausführungsbeispiel gemäß Figur 1 ist somit die Meß- und Regelgröße die Vorlauftemperatur. Es ist aber auch möglich, als Regel- und Meßgröße die Rücklauftemperatur oder die Raumtemperatur zu nehmen. Im ersteren Fall müßte der Fühler 4 in der Rücklaufleitung liegen, im zweiten Fall müßte ein Raumtemperaturfühler vorhanden sein.

Aus Vereinfachungsgründen ist es auch möglich, die beiden Regler 26 und 27 zusammenzufassen beziehungsweise nur einen einzigen Reglervorzusehen und dessen Signalabgabe zum nicht gewünschten Magnetventil zu unterdrücken. So könnte die Regeleinrichtung 25 dadurch weiter vereinfacht werden, daß die Soll-Wertgeber 28 und 29 zu einem einzigen Soll-Wertgeber zusammengefaßt werden.

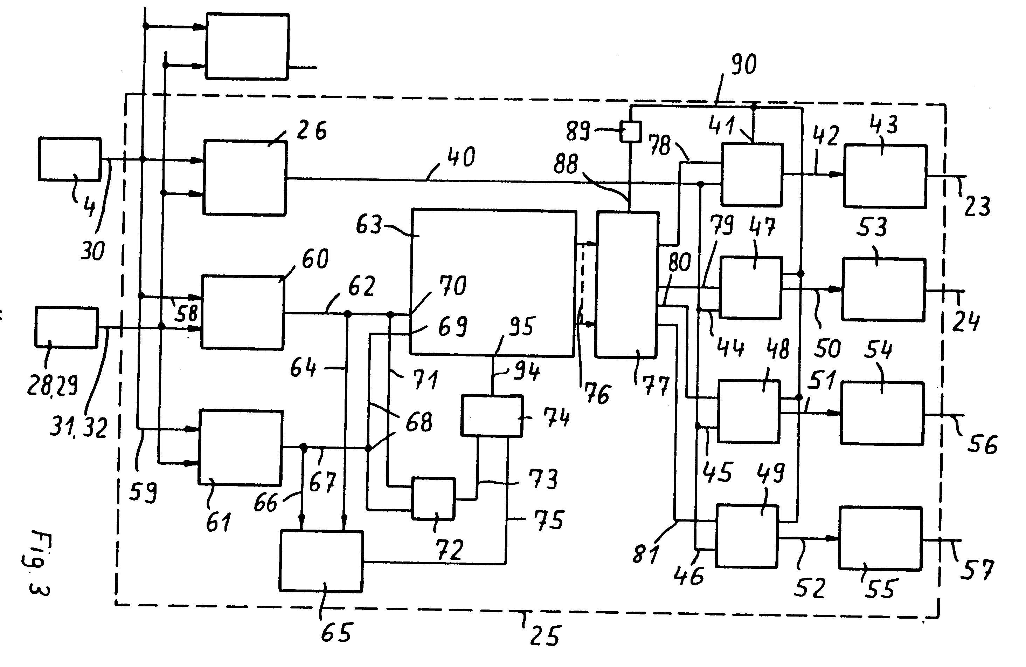

Die Regeleinrichtung 25 wird nun anhand des Blockschaltbildes der Figur 3 näher beschrieben.

Der Ist-Wertgeber 4 ist über seine Leitung 30 unmittelbar auf den Regler 26 gegeben. Der Regler 27 entfällt, beziehungsweise der Regler 26 erledigt seine Aufgaben mit. Vom Regler 26 beziehungsweise 25 führt eine Ausgangsleitung 40 zu einem Und- Gatter 41, dessen Ausgang 42 auf einen Leistungsverstärker 43 geschaltet ist, von dem die erste Stelleitung 23 zu der Wärmequelle mit der kleinsten Leistung, beispielsweise einem Sonnenkollektor, führt. Von der Leitung 40 zweigen Leitungen 44, 45 und 46 ab, die zu weiteren Und-Gliedern 47, 48 und 49 führen, deren Ausgänge der Leitungsverstärker 54 und 55 von Stelleitungen 56 und 57 gebildet werden. Die Stelleitung 24 führt zu der Wärmequelle mit der nächstgrößeren Leistung, beispielsweise einer Kompressionswärmepumpe. Die Leitung 56 ist mit der nächstleistungsstärkeren Wärmequelle verbunden, beispielsweise einer Absorptionswärmepumpe. Die Leitung 57 geht auf einen Kessel, der die größte Leistung aller Wärmequellen aufweist.

Die Leitung 30 zwischen dem Ist-Wertgeber 4 und dem Regler 26 verzweigt sich in weitere Leitungen 58 und 59, wobei die Leitung 58 zu einer Grenzwert-Überwachungseinrichtung 60 und die Leitung 59 zu einer weiteren Grenzwert-Überwachungseinrichtung 61 führt. Die Grenzwert-Überwachungseinrichtungen 60 und 61 unterscheiden sich durch unterschiedliche Höhen voneinander. Wird die Vorlauftemperatur der Vorlaufleitung 3 durch einen oder zwei 2-Punkt-Regler überwacht, so liegt der Schaltpunkt der Grenzwert-Überwachungseinrichtung 60 unterhalb des Einschaltpunktes des 2-Punkt-Reglers, während der Schaltpunkt der Grenzwert-Überwachungseinrichtung 61 oberhalb des Abschaltpunktes liegt.

Bei der Verwendung von stetigen Reglern würden die beiden Schaltschwellen oberhalb beziehungsweise unterhalb des P-Bereiches liegen, bei der Verwendung eines I-Reglers oberhalb beziehungsweise unterhalb des Soll-Wertes.

Die Grenzwert-Überwachungseinrichtung 60 ist über eine Leitung 62 mit einem Zähler 63 verbunden. Von der Leitung 62 zweigt eine Leitung 64 ab, die zu einem Zeitglied 65 führt. Ein weiterer Eingang des Zeitgliedes 65 wird von einer Leitung 66 gebildet, die von einer Leitung 67 abgeht, die den Ausgang der zweiten Grenzwert-Überwachungseinrichtung 61 bildet und die zu einem Rückwärtszähleingang 69 des Zählers 63 führt. Die Leitung 62 führt zu einem Vorwärtszähleingang 70 des Zählers 63. Die Leitung 62 ist weiterhin über eine Leitung 71 mit einem Oder-Glied 72 verbunden, dessen zweiter Eingang mit der Leitung 68 beziehungsweise 67 verbunden ist. Ein Ausgang 73 des Oder-Gliedes 72 bildet einen Eingang eines Und-Gliedes 74, dessen anderer Eingang vom Ausgang des Zeitgliedes 65 über eine Leitung 75 gebildet ist. Der Ausgang des Und-Gliedes 74 ist über eine Leitung 94 auf den Zähleingang 95 des Zählers 63 geführt. Der Zähler 63 ist ein Binärzähler und ist mit einem Leitungsbündel 76 mit einer Kodiereinrichtung 77 verbunden, die so viel Ausgänge hat wie Wärmequellen und damit Leistungsverstärker und Und- Glieder 41, 43, 47, 48, 49, 53, 54 und 55 vorhanden sind. So ist die Kodiereinrichtung 77 über eine Leitung 78 mit dem Und- Glied 41, über eine Leitung 79 mit dem Und-Glied 47, über eine Leitung 80 mit dem Und-Glied 48 und über eine Leitung 81 mit dem Und-Glied 49 verbunden.

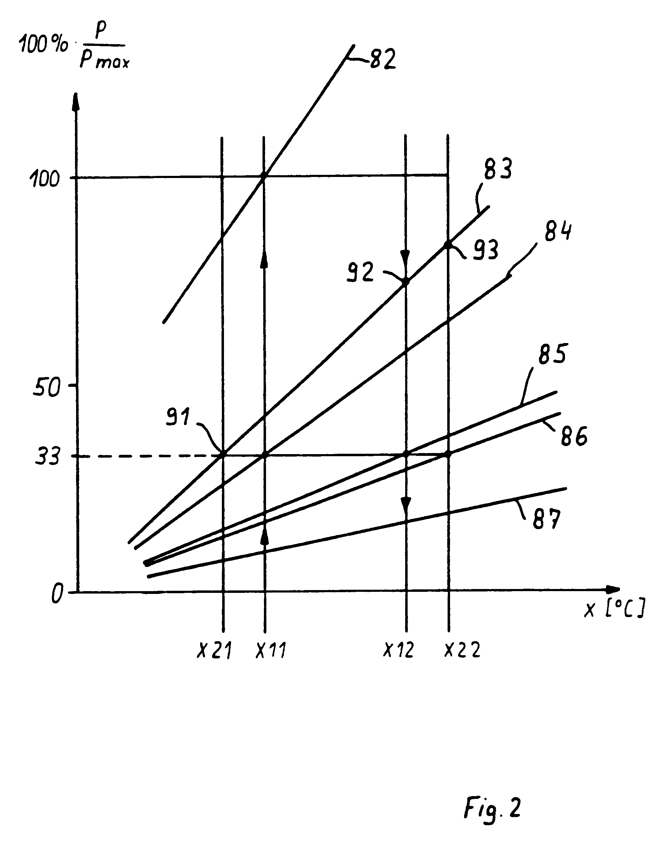

Die Funktion der Regeleinrichtung 25 wird nunmehr anhand des Diagramms der Figur 2 beschrieben. Bei dem Diagramm ist in der Abszisse die Regelgröße, im Ausführungsbeispiel also die Vorlauftemperatur in °C, aufgetragen, in der Ordinate die Leistung P dividiert durch P max von 0 bis 100 %. Da die Ein- und Ausschaltschwellen der im Ausführungsbeispiel zur Anwendung kommenden 2-Punkt-Regler übereinandergelegt werden, kann man mit einem 2-Punkt-Regler 26 auskommen. Dieser 2-Punkt-Regler steuert beide oder mehrere Wärmequellen, erweist eine Einschaltschwelle X 11 und eine Ausschaltschwelle X 12 auf. bei der Verwendung eines stetigen Reglers, insbesondere eines Proportionalreglers, würde das P-Band über den Temperaturbereich X 11 bis X 12 reichen. Bei der Verwendung eines I-Reglers würde man dessen Soll-Wert etwa auf eine mittlere Temperatur zwischen X 11 und X 12 legen. Es ist weiterhin eine erste Schaltschwelle X 21 vorgesehen, die unterhalb von X 11 liegt sowie eine zweite Schaltschwelle X 22, die auf einem Temperaturwert oberhalb von X 12 liegt. Die Schaltschwellen X 21 und X 22 liegen demgemäß höher und tiefer als die Ein- und Ausschaltschwelle X 11 und X 12 beziehungsweise ober- und unterhalb des P-Bereiches oder bei der Verwendung eines I-Reglers ober- und unterhalb des Soll-Wertes. Für das Ausführungsbeispiel sei jetzt weiterhin angenommen, daß sich die Leistung der beiden Wärmequellen des Ausführungsbeispieles um den Faktor 2 der Leistung unterscheiden, das heißt, die eine Wärmequelle weist 1/3 der Gesamtleistung auf.

Im Diagramm ist eine Kurvenschar 82, 83, 84 bis 87 gezeichnet, die vom O-Punkt ausgeht und die Zuordnung einer Leistung beziehungsweise einer Vorlauftemperatur zu einer möglichen Außentemperatur darstellt. Je tiefer die Außentemperatur liegt, um so mehr nähert sich die Gerade der Kurve 82 und umgekehrt.

Für die Erklärung der Funktion wird zunächst davon ausgegangen, daß eine hohe Außentemperatur herrscht, beispielsweise der Verlauf von Leistung und Außentemperatur gemäß der Kurve 87 festliegt und die Heizungsanlage kalt ist. Da die Einschaltschwelle X 11 von der Ist-Vorlauftemperatur unterschritten ist, bewirkt der Regler ein Einschaltsignal auf die Leitung 40, das an allen Und-Gliedern 41, 47, 48 und 49 anliegt. Im Falle eines 2-punkt-Reglers ist das ein Einschaltbefehl, im Falle eines P-Reglers ist es eine der Regelabweichung proportionale Stellgröße, im Falle eines I-Reglers ein Befehl, das zugehärige Magnetventil fortlaufend weiter zu öffnen. Die Kodiereinrichtung 77 befindet sich in Grundstellung, das heißt, sie gibt auf die Leitung 78 ein Freigabe-Signal an das Und-Glied 41, so daß die Wärmequelle, die an Leitung 23, zum Beispiel die Wärmequelle 8, angeschlossen ist, einschaltet und im Falle eines P-Reglers in ihrer Leistung gesteuert wird.

Die Meßgröße liegt aber über die Leitung 30 und die Leitung 58 und 59 auch an den beiden Grenzwert-Überwachungseinrichtungen 60 und 61 an. An diesen liegt auch der eingestellte Soll-Wert vom Geber 28 über die Leitung 31 an, der Soll-Wert ist gleichermaßen dem Regler zugeführt.

Nunmehr können folgende Möglichkeiten auftreten:

Die Regelgröße läuft auf der Kurve 87 hoch und überschreitet die Ausschaltschwelle X 12, damit taktet die Wärmequelle 8 zwischen Ein- und Ausschaltpunkt hin und her. Erreicht die Regelgröße nicht den Wert X 12, überschreitet aber den Wert X 11, so bleibt die Wärmequelle 8 dauernd eingeschaltet. Überschreitet die Regelgröße den Wert X 21, so schaltet die Grenzwert-Überwachungseinrichtung 60 zurück, damit kann der Zähler63 nicht weiterzählen. Ist die Wärmeanforderung durch den Verbraucher 2 jedoch so hoch, daß die erste Wärmequelle kein Überschreiten der Vorlauftemperatur über den Wert von X 21 bewirkt, so bleibt das Ausgangssignal der Grenzwert-Überwachungseinrichtung 60 länger bestehen als die am Zeitglied 65 eingestellte Dauer. Die Grenzwert-Überwachungseinrichtung 60 gibt auf ihre Ausgangsleitung 62 ein Signal, das einmal an den Vorwärtszähleingang 70 des Zählers 63 gelangt und über die Abzweigleitung 64 auf das Zeitglied 65 geschaltet wird. Das Zeitglied 65 wirkt als Verzögerungsglied, und nach dem Ablauf einer am Zeitglied 65 einstellbaren Zeitspanne gelangt ein Ausgangssignal über die Leitung 75 auf den einen Eingang des Und-Gliedes 74. Dem Und-Glied 74 ist das Oder-Glied 72 vorgeschaltet, dessen Eingang über die Leitung 71 bereits Spannung führt. Nach Ablauf der Schaltdauer des Zeitgliedes 65 liegt Spannung am Eingang 75 des Und-Gliedes 74, aber auch Spannung über die Leitung 71 am Oder-Glied 72. Damit schaltet der Zähler 63 um einen Schritt weiter, wodurch von der Kodiereinrichtung 77 neben der Leitung 78 auch die Leitung 79 mit Spannung beaufschlagt wird, so daß das Und-Glied 47 durchschaltet und die zweite Wärmequelle über die Leitung 24 erregt wird. Bei diesem Zuschalten wird über die Leitung 78 von der Kodiereinrichtung 77 ein Dauersignal auf das Und-Glied 41 gegeben. Die erste Wärmequelle arbeitet nun mit der maximal möglichen Leistung. Hierzu hat die Kodiereinrichtung 77 einen Ausgang 88, der zu einem Maximalwertgeber 89 führt, der über eine Leitung 90 an die Und-Glieder41, 47, 48 und 49 angeschlossen ist, so daß immer nur die Leistung einer Wärmequelle über den Regler 26 verändert wird, während die übrigen zugeschalteten Wärmequellen mit ihrer Maximalleistung betrieben werden.

Für diesen Fall kommt jetzt allerdings aus praktischen Erwägungen nicht mehr die Kurve 87 in Frage, sondern eine wesentlich steiler liegende Kurve, zum Beispiel die Kurve 83. Ist nur die Wärmequelle 8 in Betrieb, so bedeutet das, daß der Arbeitspunkt sich auf der Kurve 83 unterhalb des Punktes 91 bewegt. Da nunmehr, wie beschrieben, die zweite Wärmequelle zugeschaltet wird, wird der Punkt 91 in Richtung auf das höher liegende Kurvenstück der Kurve 83 gefahren. Hierbei gibt es jetzt wieder die Möglichkeiten, daß der Punkt 92 erreicht wird, hier würde die zweite Wärmequelle abgeschaltet werden, da der Wert X 12, der Abschaltwert, erreicht wird. Damit wird die Wärmequelle 9, also die nächsthöhere, abgeschaltet, die Leitung 24 wird spannungslos. Da das Und-Glied 41 ein Dauersignal bekommt, bleibt die Wärmequelle 8 eingeschaltet. Die Regelgröße geht durch das Abschalten der zweiten Wärmequelle zurück, so daß schon aus diesem Grund die Wärmequelle 8 nicht abgeschaltet werden würde.

Läuft beispielsweise aus dem Grunde einer geringeren Verbraucherwärmeanforderung die Kurve 83 jedoch über einen Punkt 93 hinaus, so wird die Schaltschwelle X 22 erreicht. Beim Erreichen dieser Schaltschwelle X 22 spricht die Grenzwert-Überwachungseinrichtung 61 an. Das Ausgangssignal dieser Grenzwert-Überwachungseinrichtung 61 liegt über die Leitung 67 und 68 am Rückwärtszähleingang 69 des Zählers 63 an. Das Zeitglied 65 wird zum gleichen Zeitpunkt über die Leitung 66 aktiviert, nach Ablauf der am Zeitglied 65 eingestellten Zeit zählt der Zähler 63 zurück. Damit steht der Zähler 63 wieder in der Grundstellung, was einem normalen Einschaltbefehl mit der Regelabweichung der Leitung 40 auf der Leitung 23 entspricht, so daß neben dem Abschalten der zweiten größeren Wärmequelle die erste Wärmequelle von der Maximalleistung auf die in Betrieb gemäß der Regelabweichung zurückgeführt wird beziehungsweise beim Überfahren der Schaltschwelle X 12 mit abgeschaltet wird. Das Zu- und Abschalten der anderen Wärmequellen erfolgt analog.

Es besteht nun noch die Möglichkeit, daß Wärmequellen gleicher Leistung gewählt werden, hierbei müßte von der Kodiereinrichtung 77 eine Zwangsauswahl der Wärmequelle beim Ein- und Ausschalten vorgenommen werden. Das heißt, die Kodiereinrichtung 77 müßte zunächst das Und-Glied 41, anschließend das Und-Glied 47 aktivieren und so weiter. Bei einer minimalen Wärmeanforderung würde zunächst die an das Und-Glied 41 angeschlossene Wärmequelle arbeiten. Erreicht die Regelgröße hierbei nicht den Soll-Wert, so wird das Und-Glied 41 mit einem Maximumsignal beaufschlagt, also daß die zugehörige Wärmequelle auf Maximalleistung geht. Das Und-Glied 47 wird getaktet, die Und-Glieder 48 und 49 sind noch verriegelt. Reicht auch diese Leistung nicht aus, so gehen die an Und-Glieder 41 und 47 schon angeschlossenen Wärmequellen auf Maximalleistung, während die Wärmequelle, die dem Und-Glied 48 zugehörig ist, getaktet wird und die Wärmequelle, die dem Und-Glied 49 zugehörig ist, verriegelt wird.

Es besteht auch noch die Möglichkeit, daß bei der Wahl in der Leistung stark ungleicher Wärmequellen die erste Wärmequelle abgeschaltet wird und nur die zweite Wärmequelle, die taktende, die Beheizung der Heizungsanlage 1 übernimmt. Würde die zweite Wärmequelle diese Leistung nicht schaffen, so würde über das Und-Glied 48 die nächstgrößere Wärmequelle zugeschaltet werden, so daß die Wärmequellen mit der niedrigsten und der größten Leistung in ihrer Ausschaltung blockiert würden.

## Patentansprüche

1. Regeleinrichtung für eine von wenigstens zwei Wärmequellen beheizbare Heizungsanlage mit einer Temperatur als Regelgröße und einem Regler für die Wärmequellen, wobei bei Verwendung eines unstetigen Reglers im Abstand und außerhalb des Abstandes von der Ein- und Ausschaltschwelle je eine weitere einen unteren beziehungsweise oberen Grenzwert bildende Schaltschwelle vorgesehen ist, die mittels eines Logikelementes das Zu- und Abschalten der zugehörigen Wärmequelle bewirkt, dadurch gekennzeichnet, daß das Logikelement als Zähler (63) ausgebildet ist, dem eine Kodiereinrichtung (77) unmittelbar nachgeschaltet ist, die die einzelnen Stellglieder (21, 22) der Wärmequellen (8, 9) auswählt und schaltet, wobei die Ausgänge zweier Grenzwert-Überwachungseinrichtungen (60, 61) an einem Rückwärtszähleingang (69) beziehungsweise einem Vorwärtszähleingang (70) des Zählers (63) sowie an einem Eingang eines Zeitgliedes (65) für eine Verzögerungszeit liegen, in dessen Ausgang ein Und-Glied (74) gelegt ist, dessen anderer Eingang von einem Oder-Glied (72) gebildet ist, das mit seinen beiden Eingängen zu denen des Zeitgliedes (65) parallel liegt und mit den Ausgängen der beiden Grenzwert-Überwachungseinrichtungen (60 und 61) verbunden ist, wobei der eine Eingang des Oder-Gliedes (72) mit dem Vorwärtszähleingang und der andere mit dem Rückwärtszähleingang des Zählers (63) verbunden ist und wobei der Ausgang des Und-Gliedes (74) mit einem Zähleingang (95) des Zählers (63) verbunden ist.

2. Regeleinrichtung für eine von wenigstens zwei Wärmequellen beheizbare Heizungsanlage mit einer Temperatur als Regelgröße und einem Regler für die Wärmequellen, wobei bei Verwendung eines Proportionalreglers außerhalb beider Seiten des P-Bereiches des Reglers eine weitere Schaltschwelle vorgesehen ist, die mittels eines Logikelementes das Zu- und Abschalten der zugehörigen Wärmequellen bewirkt, dadurch gekennzeichnet, daß das Logikelement als Zähler (63) ausgebildet ist, dem eine Kodiereinrichtung (77) unmittelbar nachgeschaltet ist, die die einzelnen Stellglieder (21, 22) der Wärmequellen (8, 9) auswählt und schaltet, wobei die Ausgänge zweier Grenzwert-Überwachungseinrichtungen (60,61) an einem Rückwärtszähleingang (69) beziehungsweise einem Vorwärtszähleingang (70) des Zählers (63) sowie an einem Eingang eines Zeitgliedes (65) für eine Verzögerungszeit liegen, in dessen Ausgang ein Und-Glied (74) gelegt ist, dessen anderer Eingang von einem Oder-Glied (72) gebildet ist, das mit seinen beiden Eingängen zu denen des Zeitgliedes (65) parallel liegt und mit den Ausgängen der beiden Grenzwert-Überwachungseinrichtungen (60, 61) verbunden ist, wobei der eine Eingang des Oder-Gliedes (72) mit dem Vorwärtszähleingang und der andere mit dem Rückwärtszähleingang des Zählers (63) verbunden ist und wobei der Ausgang des Und-Gliedes (74) mit einem Zähleingang (95) des Zählers (63) verbunden ist.

3. Regeleinrichtung für eine von wenigstens zwei Wärmequellen beheizbare Heizungsanlage mit einer Temperatur als Regelgröße und einem Regler für die Wärmequellen, wobei unter Verwendung eines Integralreglers ober- und unterhalb des Soll-Wertes des Reglers eine weitere Schaltschwelle vorgesehen ist, die mittels eines Logikelementes (63) das Zu- und Abschalten der zugehörigen Wärmequelle bewirkt, dadurch gekennzeichnet, daß das Logikelement als Zähler (63) ausgebildet ist, dem eine Kodiereinrichtung (77) unmittelbar nachgeschaltet ist, die die einzelnen Stellglieder (21, 22) der Wärmequellen (8, 9) auswählt und schaltet, wobei die Ausgänge zweier Grenzwert-Überwachungseinrichtungen (60,61) an einem Rückwärtszähleingang (69) beziehungsweise einem Vorwärtszähleingang (70) des Zählers (63) sowie an einem Eingang eines Zeitgliedes (65) für eine Verzögerungszeit liegen, in dessen Ausgang ein Und-Glied (74) gelegt ist, dessen anderer Eingang von einem Oder-Glied (72) gebildet ist, das mit seinen beiden Eingängen zu denen des Zeitgliedes (65) parallel liegt und mit den Ausgängen der beiden Grenzwert-Überwachungseinrichtungen (60 und 61) verbunden ist, wobei der eine Eingang des Oder-Gliedes (72) mit dem Vorwärtszähleingang und der andere mit dem Rückwärtszähleingang des Zählers (63) verbunden ist und wobei der Ausgang des Und-Gliedes (74) mit einem Zähleingang (95) des Zählers (63) verbunden ist.

4. Regeleinrichtung nach Anspruch 1, dadurch gekennzeichnet, daß die Abstände der Schaltschwellen (X 21, X 22) von den Ein- und Ausschaltschwellen (X 11, X 12) einstellbar sind.

5. Regeleinrichtung nach einem der Ansprüche 1 bis 3, dadurch gekennzeichnet, daß die Eingänge des Reglers (26) parallel zum Ist-Wertgeber (4) für die Regelgröße, zum Soll-Wertgeber (28) sowie zu den beiden Grenzwert-Überwachungseinrichtungen (60, 61) für die Schaltschwellen (X 21, X 22) liegen.

6. Regeleinrichtung nach einem der vorangegangenen Ansprüche, dadurch gekennzeichnet, daß die Verzögerungszeit des Zeitgliedes (65) einstellbar ist.

7. Regeleinrichtung nach Anspruch 6, dadurch gekennzeichnet, daß dem Eingang der einen Grenzwert-Überwachungseinrichtung (61) ein anderer Zeitwert des Zeitgliedes (65) zugeordnet ist als dem Eingang der anderen Grenzwert-Überwachungseinrichtung (60).

## Claims

1. An automatic control apparatus for a heating system which is heatable by at least two heat sources, wherein a temperature is used as a controlled variable and a controller is provided for the heat sources, in case of the use of a discontinuous-action controller two additional switching thresholds, which respectively define a lower limit and an upper one, are respectively provided in the range between the turn-on and turn-off thresholds and outside said range and each of said additional switching tresholds via a logic element causes the associated heat source to be turned on and off, characterized in thatthe logic element consists of a counter (63), which is directly succeeded by an encoder (77), by which the several final control elements (21, 22) for the heat sources (8, 9) are selected and switched, the outputs of two limit monitors (60, 61) are respectively connected to a down input (69) and an up input (70) of the counter (63) and to respective inputs of a timer (65) for effecting a time delay, and AND gate is connected to the output of said timer and in its other input contains an OR gate (72), the two inputs of which are parallel to those of the timer (65) and are connected to the outputs of the two limit monitors (60 and 61), one input of the OR gate (72) is connected to the up input and the other to the down input of the counter (63) and the output of the AND gate (74) is connected to a counting input (95) of the counter (63).

2. An automatic control apparatus for a heating system which is heatable by at least two heat sources, wherein a temperature is used as a controlled variable and a controller is provided for the heat sources, in case of the use of a proportional-action controller an additional switching treshold is provided outside the proportional band of the controller on each side thereof and by means of a logic element causes the associated heat sources to be turned on and off and each of said additional switching thresholds via a logic element causes the associated heat source to be turned on and off, characterized in that the logic element consists of a counter (63), which is directly succeeded by an encoder (77), by which the several final control elements (21, 22) for the heat sources (8, 9) are selected and switched, the outputs of two limit monitors (60, 61) are respectively connected to a down input (69) and an up input (70) of the counter (63) and to respective inputs of a timer (65) for effecting a time delay, an AND gate is connected to the output of said timer and in its other input contains an OR gate (72), the two inputs of which are parallel to those of the timer (65) and are connected to the outputs of the two limit monitors (60 and 61), one input of the OR gate (72) is connected to the up input and the other to the down input of the counter (63) and the output of the AND gate (74) is connected to a counting input (95) of the counter (63).

3. An automatic control apparatus for a heating system which is heatable by at least two heat sources, wherein a temperature is used as a controlled variable and a controller is provided for the heat sources, in case of the use of an integral-action controller two further switching thresholds are respectively provided above and below the set-point of the controller and each of said additional switching thresholds via a logic element causes the associated heat source to be turned on and off, characterized in that the logic element consists of a counter (63), which is directly succeeded by an encoder (77), by which the several final control elements (21, 22) for the heat sources (8, 9) are selected and switched, the outputs of two limit monitors (60, 61) are respectively connected to a down input (69) and an up input (70) of the counter (63) and to respective inputs of a timer (65) for effecting a time delay, an AND gate is connected to the output of said timer and in its other input contains an OR gate (72), the two inputs of which are parallel to those of the timer (65) and are connected to the outputs of the two limit monitors (60 and 61), one input of the OR gate (72) is connected to the up input and the other to the down input of the counter (63) and the output of the AND gate (74) is connected to a counting input (95) of the counter (63).

4. A control apparatus according to claim 1, characterized in that the differences between the switching thresholds (X 21, X 22) and the turn-off thresholds (X 11, X 12) are adjustable.

5. A control apparatus according to any of claims 1 to 3, characterized in that the inputs of the controller (26) are connected in parallel to the actual-value sensor (4) for the controlled variable, to the set point adjuster (28) and to the two limit monitors (60, 61) for the switching thresholds (X 21, X 22).

6. A control apparatus according to any of the preceding claims, characterized in that the time delay of the timer (65) is adjustable.

7. A control apparatus according to claim 6, characterized in that the time delay of the timer (65) which is associated with the input of one limit monitor (61) differs from the time delay of the timer (65) which is associated with the input of the other limit monitor (60).

## Revendications

1. Système régulateur pour une installation de chauffage avec au moins deux sources de chaleur, avec une température comme grandeur réglée et un régulateur pour les sources de chaleur, des seuils d'action étant prévus, en cas d'utilisation d'un régulateur en discontinu, à une distance et en dehors de la distance du seuil d'enclenchement et de déclenchement, constituant respectivement une valeur limite inférieure et supérieure, et qui provoquent, à l'aide d'un élément logique, la mise en et hors marche de la source de chaleur respective, caractérisé par le fait que l'élément logique est conçu comme compteur (63) suivi directement d'un codeur (77) qui choisit et actionne les différents organes de commande (21, 22) des sources de chaleur (8, 9), les sorties de deux contrôleurs de seuil (60, 61) étant reliées à une entrée soustrayante (69) respectivement à une entrée additionnante (70) du compteur (63), ainsi qu'à une entrée d'un organe temporisateur (65) à effet retardateur dans la sortie duquel est mis un circuit ET (74) dont l'autre entrée est formée par un circuit OU (72) dont les deux entrées sont en parallèle avec celles de l'organe temporisateur (65), et qui est relié aux sorties des deux contrôleurs de seuil (60, 61), l'une des entrées du circuit OU (72) étant reliée à l'entrée additionnante, et l'autre entrée, à l'entrée soustrayante du compteur (63), et la sortie du circuit ET (74) étant reliée à une entrée (95) du compteur (63).

2. Système régulateur pour une installation de chauffage avec au moins deux sources de chaleur, avec une température comme grandeur réglée et un régulateur pour les sources de chaleur, un seuil d'action étant prévu, en cas d'utilisation d'un régulateur proportionnel, de part et d'autre de la bande proportionnelle du régulateur, qui provoque, à l'aide d'un élément logique, la mise en et hors marche de la source de chaleur respective, caractérisé par le fait que l'élément logique est conçu comme compteur (63) suivi directement d'un codeur (77) qui choisit et actionne les différents organes de commande (21,22) des sources de chaleur (8, 9), les sorties de deux contrôleurs de seuil (60, 61) étant reliées à une entrée soustrayante (69) respectivement à une entrée additionnante (70) du compteur (63), ainsi qu'à une entrée d'un organe temporisateur (65) à effet retardateur dans la sortie duquel est mis un circuit ET (74) dont l'autre entrée est formée par un circuit OU (72) dont les deux entrées sont en parallèle avec celles de l'organe temporisateur (65), et qui est relié aux sorties des deux contrôleurs de seuil (60, 61), l' une des entrées du circuit OU (72) étant reliée à l' entrée additionnante, et l'autre entrée, à l'entrée soustrayante du compteur (63), et la sortie du circuit ET (74) étant reliée à une entrée (95) du compteur (63).

3. Système régulateur pour une installation de chauffage avec au moins deux sources de chaleur, avec une température comme grandeur réglée et un régulateur pour les sources de chaleur, un seuil d'action étant prévu, en cas d'utilisation d'un régulateur intégral, au-dessus respectivement au-dessous de la consigne du régulateur, qui provoque, à l'aide d'un élément logique, la mise en et hors marche de la source de chaleur respective, caractérisé par le fait que l'élément logique est conçu comme compteur (63) suivi directement d'un codeur (77) qui choisit et actionne les différents organes de commande (21, 22) des sources de chaleur (8, 9), les sorties de deux contrôleurs de seuil (60, 61) étant reliées à une entrée soustrayante (69) respectivement à une entrée additionnante (70) du compteur (63), ainsi qu'à une entrée d'un organe temporisateur (65) à effet retardateur dans la sortie duquel est mis un circuit ET (74) dont l'autre entrée est formée par un circuit OU (72) dont les deux entrées sont en parallèle avec celles de l'organe temporisateur (65), et qui est relié aux sorties des deux contrôleurs de seuil (60, 61), l'une des entrées du circuit OU (72) étant reliée à l'entrée additionnante, et l'autre entrée, à l'entrée soustrayante du compteur (63), et la sortie du circuit ET (74) étant reliée à une entrée (95) du compteur (63).

4. Système régulateur suivant la revendication 1, caractérisé par le fait que les distances entre les seuils d'action (X 21, X 22) et les seuils d'enclenchement et de déclenchement (X 11, X 12) sont réglables.

5. Système régulateur suivant l'une des revendications 1 à 3, caractérisé par le fait que les entrées du régulateur (26) sont en parallèle avec le capteur de mesure (4) pour la grandeur réglée, avec le générateur de signaux de consigne (28) ainsi qu'avec les deux contrôleurs de seuil (60, 61) pour les seuils d'action (X 21, X 22).

6. Système régulateur suivant l'une des revendications précédentes, caractérisé par le fait que la temporisation par l'organe (65) est réglable.

7. Système régulateur suivant la revendication 6, caractérisé par le fait que la temporisation par l'organe (65) pour l'entrée du contrôleur de seuil (61) diffère de celle pour l'entrée du contrôleur de seuil (60).
